# EUROPEAN PATENT APPLICATION

(11) **EP 4 645 516 A1**
(43) Date of publication of application: **05.11.2025**
(21) Application number: 24775094.6
(22) Date of filing: 05.03.2024
(51) Int. Cl.: H01M 10/42, H01M 10/613, H01M 10/6556, H01M 10/6567, H01M 10/657, H01M 50/204, H01M 50/271, H01M 50/224, H01M 50/50, A62C 35/10

(54) **BATTERY DISCONNECTION UNIT INCLUDING FIRE-EXTINGUISHING LIQUID AND SECONDARY BATTERY COMPRISING SAME**

(30) Priority: 17.03.2023 KR 20230035481; 07.11.2023 KR 20230153043; 25.01.2024 KR 20240011464
(71) Applicant: LG Energy Solution, Ltd., Seoul 07335 (KR)
(72) Inventor: Hwang, Sung Tack, Daejeon 34122 (KR)
(74) Representative: Goddar, Heinz J.
(86) International application number: PCT/KR2024/002817
(87) International publication number: WO 2024/196046

(57) **Abstract**

A battery disconnect unit includes: a housing designed to accommodate an electrical component therein; and at least one cavity formed in a body of the housing for storing a fire extinguishing liquid. The fire extinguishing liquid stored in the cavity is prevented from being ejected to an outside of the housing under a condition below a preset temperature, and is ejected to the

## Description

### TECHNICAL FIELD

This application is based on and claims priority from Korean Patent Application Nos. 10-2023-0035481, 10-2023-0153043 and 10-2024-0011464, filed on March 17, 2023, November 7, 2023 and January 25, 2024, respectively, with the Korean Intellectual Property Office, the disclosures of which are incorporated herein in their entireties by reference.

The present disclosure relates to a battery disconnect unit, and more particularly to a battery disconnect unit used for a battery module or pack including chargeable and dischargeable secondary batteries.

### BACKGROUND

Recently, the price of energy resources has risen due to the depletion of fossil fuels, and the environmental pollution has been the issue of immense concerns. Under the circumstances, environmentally-friendly alternative energy sources have become indispensable factors for future lives. Thus, researches are ongoing on technologies of producing various powers such as solar, wind, and tidal powers, and considerable interests are continuing in power storage systems such as batteries for more efficiently using produced electric energy.

Further, the demand for batteries has increased rapidly with the technical development and the rising demand for electronic mobile devices and electric automobiles that use batteries. In response, more studies are being conducted on batteries that can meet various needs.

Batteries that store electric energy may generally be classified into primary batteries and secondary batteries. While primary batteries are disposable one-time use batteries, secondary batteries are typically multi-use rechargeable batteries manufactured using a material undergoing repeated oxidation and reduction by current. For example, when a reduction reaction occurs in the material from current passing therethrough, the battery is charged, and when an oxidation reaction occurs in the material, the battery is discharged. The repeated charging and discharging generate electricity.

According to the shapes, the secondary batteries may be classified into, for example, cylindrical cells, pouch cells, and prismatic cells. Especially, a pouch cell may include an electrode assembly formed by stacking, for example, a positive electrode, a negative electrode, and a separator, all of which are housed in a pouch.

Meanwhile, a plurality of secondary batteries described above may be accommodated in a frame to form a battery module. Further, a plurality of battery modules may form a battery pack. In this case, the battery module or pack may include a battery disconnect unit (BDU). For example, in a battery pack, a battery disconnect unit may be disposed between a power conversion device and battery modules to disconnect the power of the battery modules when an abnormal situation occurs, for example, under a condition where a current exceeds a set range. In this way, the battery disconnect unit may improve the stability of the battery pack.

### DISCLOSURE OF THE INVENTION

### TECHNICAL PROBLEM

The present disclosure provides a battery disconnect unit capable of continuously dampening a fire occurring in a battery, over a certain period of time.

### TECHNICAL SOLUTION

According to an embodiment of the present disclosure, a battery disconnect unit includes: a housing designed to accommodate an electrical component therein; and at least one cavity formed in a body of the housing for storing a fire extinguishing liquid. The fire extinguishing liquid stored in the cavity may be prevented from being ejected to an outside of the housing under a condition below a preset temperature, and be ejected to the outside of the housing at the preset temperature or higher.

In the housing, a passage may be further formed as a channel that extends from the cavity storing the fire extinguishing liquid to communicate with the outside of the housing, and the housing further includes a cover disposed in the passage to prevent the fire extinguishing liquid from being ejected to the outside of the housing under the condition below the preset temperature.

The cover may form flow paths therein, through which the fire extinguishing liquid passes at the preset temperature or higher.

The cover may be made of a fire-resistant silicone.

The fire-resistant silicone may harden while swelling at the preset temperature or higher, thereby forming crevices therein, and the fire extinguishing liquid may pass through the passage by flowing through flow paths formed along the crevices.

The housing may include a first housing portion, and a second housing portion coupled to the first housing portion to accommodate the electrical component.

The fire extinguishing liquid may include a first fire extinguishing liquid stored in a first cavity formed in the first housing portion, and a second fire extinguishing liquid stored in a second cavity formed in the second housing portion.

In the first housing portion, a first passage may be formed as a channel that extends from the first cavity storing the first fire extinguishing liquid to communicate with the outside of the housing, and in the second housing portion, a second passage may be formed as a channel that extends from the second cavity storing the second fire extinguishing liquid to communicate with the outside of the housing.

The first passage may extend from the first cavity storing the first fire extinguishing liquid toward the electrical component, and the second passage may extend from the second cavity storing the second fire extinguishing liquid in a direction away from the electrical component.

The first housing portion may include a first cover disposed in the first passage to prevent the first fire extinguishing liquid from being ejected to the outside of the housing under the condition below the preset temperature, and the second housing portion may include a second cover disposed in the second passage to prevent the second fire extinguishing liquid from being ejected to the outside of the housing under the condition below the preset temperature.

The second passage may include a lower passage extending in one direction from one side of the second cavity storing the second fire extinguishing liquid, and a side passage extending laterally in another direction from another side of the second cavity storing the second fire extinguishing liquid.

The second housing portion may include a lower cover disposed in the lower passage, and a side cover disposed in the side passage.

The housing may be made of any one of aluminum, a stainless steel, and an alloy.

The electrical component may include one or more relays that open and close an electric circuit connected to a battery module.

The electrical component may further include a busbar connecting the relays to each other.

The preset temperature may be in a range of approximately 300 °C or higher and approximately 400 °C or lower.

According to another embodiment of the present disclosure, a battery disconnect unit includes: an electrical component; and a housing. The housing may include a cavity that stores a fire extinguishing liquid, and a cover that forms crevices therein at a preset temperature or higher, wherein a fire extinguishing liquid moves from the cavity toward an outside of the housing through flow paths formed along the crevices.

According to yet another embodiment of the present disclosure, a secondary battery pack includes the battery disconnect unit of claim 1.

### ADVANTAGEOUS EFFECTS

The battery disconnect unit according to the present disclosure includes: a housing designed to accommodate an electrical component therein; and at least one cavity formed in a body of the housing for storing a fire extinguishing liquid. The fire extinguishing liquid stored in the cavity may be prevented from being ejected to an outside of the housing under a condition below a preset temperature, and be ejected to the outside of the housing at the preset temperature or higher.

As a result, the fire extinguishing liquid in the battery disconnect unit may be ejected to the outside, thereby delaying a thermal runaway.

Further, a fire occurring in a battery pack may be prevented or suppressed from spreading to the outside.

Further, the fire extinguishing liquid may be continuously supplied toward a fire over a certain period of time.

Further, the housing of the battery disconnect unit may be prevented from being melted and destroyed.

This prevents the battery disconnect unit from being disabled by a fire.

Further, a time may be secured for operating safety devices in the battery pack.

As a result, the stability of the battery pack may be improved.

The effects of the present disclosure are not limited by those described above, and more various effects may be included as described herein below.

### BRIEF DESCRIPTION OF THE DRAWINGS

FIG. 1 is an exploded perspective view schematically illustrating a battery disconnect unit according to a first embodiment of the present disclosure.
FIG. 2 is a perspective view schematically illustrating a battery pack including the battery disconnect unit according to the first embodiment of the present disclosure.
FIG. 3 is a cross-sectional view taken by cutting the battery disconnect unit in an assembled state according to the first embodiment of the present disclosure along the line A-A' of FIG. 1.
FIG. 4 is an enlarged view of the portion "B" in FIG. 3 that schematically illustrates a state where a fire extinguishing liquid is ejected.
FIG. 5 is a cross-sectional view taken by cutting a battery disconnect unit in an assembled state according to a second embodiment of the present disclosure along the line A-A' of FIG. 1.

Corresponding reference characters indicate corresponding components throughout the several views of the drawings. The drawing figures presented are illustrated for simplicity and clarity and have not necessarily been drawn to scale. For example, the dimensions of some of the elements in the figures may be exaggerated relative to other elements to help to improve understanding of various embodiments. Also, common but well-understood elements that are useful or necessary in a commercially feasible embodiment are often not depicted in order to facilitate a less obstructed view of these various embodiments.

### DETAILED DESCRIPTION

Hereinafter, with reference to the accompanying drawings, embodiments of the present disclosure will be described in detail to facilitate the practicing by one of ordinary skill in the art to which the present disclosure belongs. The present disclosure may be implemented in various different forms, and is not limited or restricted by the embodiments described herein below.

In order to clearly describe the present disclosure, descriptions of parts unrelated to the description of the present disclosure or detailed descriptions of related well-known art that may unnecessarily obscure the gist of the present disclosure will be omitted. When assigning reference numerals to components of each drawing throughout the descriptions herein, the same or similar components will be denoted with the same or similar reference numerals.

Words and terms used in the detailed description and the claims herein should not be interpreted to be limited to their usual or dictionary meanings, but should be interpreted to have meanings and concepts that correspond to the technical idea of the present disclosure in compliance with the principle that inventors may appropriately define terms and concepts for the purpose of best describing the present disclosure.

Throughout the descriptions herein, terms such as "about," "approximately," and "substantially" are used to describe a range of numerical values or a degree, or a close meaning thereto in consideration of an inherent manufacturing and material tolerances, and are intended to prevent infringers from unfairly taking advantage of the present disclosure that describes precise or absolute numerical values to aid the understanding of the present disclosure.

In general, a secondary battery, also known as a rechargeable battery, is formed with a configuration including battery cells, modules, battery packs, wires, a battery disconnect unit (BDU), a battery management system (BMS), and busbars. In this configuration, for example, when a failure takes place in a certain cell of a battery pack, a heat may generate rapidly in the cell and spread to nearby cells quickly, which may result in a fire. The fire in the cells may cause a fire in the modules holding the cells.

Conventional battery disconnect units (BDU) are typically disposed near modules, and the housing thereof is made of, for example, aluminum or plastic. Further, since electrical components such as relays and busbars in the battery disconnect unit are typically fixed to the housing of the battery disconnect unit, electrical shorts may occur among nearby pack structures in the event where the housing of the battery disconnect unit is destroyed by a fire. In this situation, closed electric circuits are formed in the pack structures, which accelerates a thermal runaway in the pack structures. When the thermal runaway occurs, the temperature increases even to, for example, 1,200 °C. At this time, the material such as aluminum or plastic may not sustain the structure of the battery disconnect unit.

The conventional battery disconnect units have a problem in that they have a difficulty in extinguishing a fire taking place and suppressing the spread of fire. This problem may cause additional problems including failing to smoothly exhibit the internal insulation performance of the battery disconnect unit.

Thus, a battery disconnect unit according to an embodiment of the present disclosure is designed to prevent or delay the spread of a fire in a battery pack, so as to maintain the performance of the battery pack and improve the stability of the battery pack.

Hereinafter, various embodiments of the battery disconnect unit of the present disclosure will be described in detail with reference to the accompanying drawings.

### First Embodiment

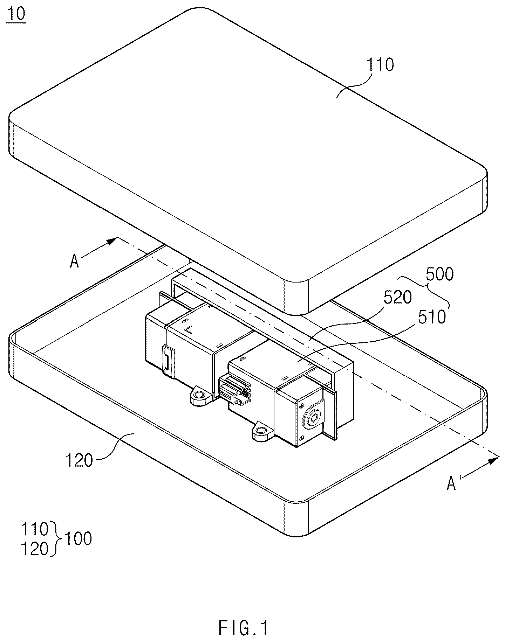

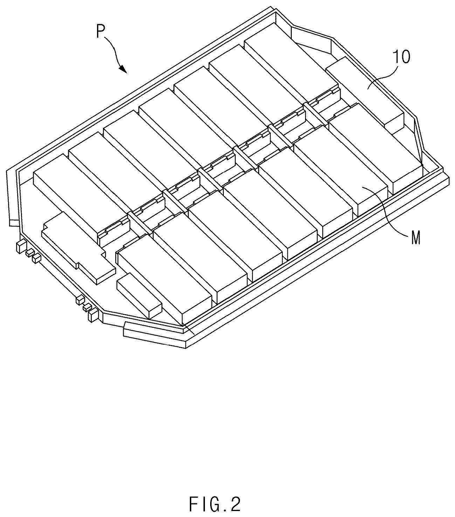

FIG. 1 is an exploded perspective view schematically illustrating a battery disconnect unit 10 according to a first embodiment of the present disclosure, and FIG. 2 is a perspective view schematically illustrating a battery pack P including the battery disconnect unit 10 according to the first embodiment of the present disclosure.

The battery disconnect unit 10 according to the first embodiment of the present disclosure may include a housing 100 and an electrical component 500.

Referring to FIG. 1, the battery disconnect unit 10 includes the housing 100 with a structure to accommodate (e.g., envelope) the electrical component 500 therein. That is, the electrical component 500 may be disposed to be accommodated in the housing 100. In an embodiment, the housing 100 of the battery disconnect unit 10 may include a first housing portion 110 and a second housing portion 120, which are coupled together to accommodate the electrical component 500. Here, the battery disconnect unit 10 may indicate a component that disconnects the power of the battery pack P illustrated in FIG. 2 for the safety of the battery pack P, for example, when a current exceeds a preset range. Further, the electrical component 500 may indicate a set of components for operating the battery disconnect unit 10. For example, in order to disconnect the power of the battery pack P (see, *e.g.,* FIG. 2), the electrical component 500 may cut off the connection between a battery module M (see, *e.g.,* FIG. 2) including a plurality of secondary batteries and a power conversion device.

Referring to FIG. 2, the battery disconnect unit 10 according to the first embodiment of the present disclosure may be disposed inside the battery pack P. For example, the battery disconnect unit 10 may be disposed at one end or both ends of the battery pack P inside the battery pack P. Further, one or more battery modules M may be disposed at an inner side than the battery disconnect unit 10 in the battery pack P. A connector (not illustrated) may be disposed near the battery disconnect unit 10 to connect the battery pack P to external devices.

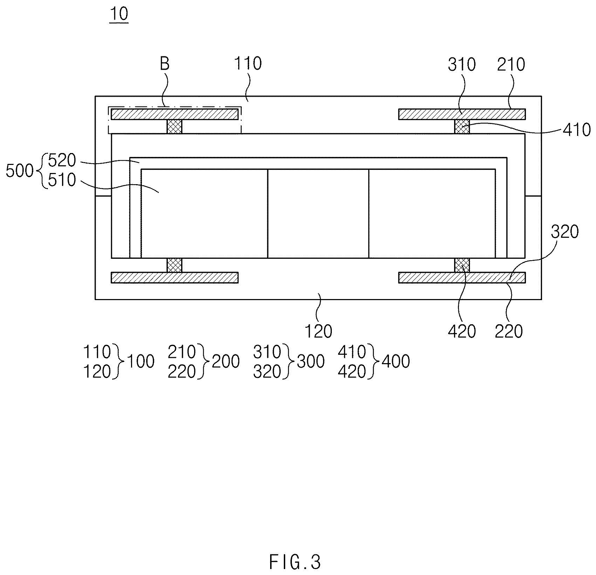

FIG. 3 is a cross-sectional view taken by cutting the battery disconnect unit 10 in the assembled state according to the first embodiment of the present disclosure along the line A-A' of FIG. 1. That is, FIG. 3 represents the cross section of the battery disconnect unit 10 according to the first embodiment of the present disclosure, which is cut along the line A-A' of FIG. 1.

As an example of a configuration to prevent the spread of a fire, the housing 100 of the battery disconnect unit 10 according to the first embodiment of the present disclosure may include a cavity 200 that, for example, stores (holds) a fire extinguishing liquid 300. The cavity 200 is, for example, embedded in each of the first housing portion 110 and the second housing portion 120 of the housing 100, and the fire extinguishing liquid 300 may be disposed in the cavity 200 embedded in each of the first housing portion 110 and the second housing portion 120. The fire extinguishing liquid 300 may include a substance that exhibits the effect of extinguishing a fire, and is flowable like that of a fluid.

The fire extinguishing liquid 300 disposed in the cavity 200 of each of the first and second housing portions 110 and 120 may be ejected to the outside of the housing 100 at a preset temperature or higher. Here, the preset temperature may refer to a temperature at which the battery disconnect unit 10 may lose its function due to a fire. Thus, the fire extinguishing liquid 300 may exhibit the fire extinguishing effect by being ejected to the outside of the housing 100 when the temperature of the battery disconnect unit 10 reaches the preset temperature. For example, the preset temperature may be a temperature between approximately 300 °C and approximately 400 °C. In an embodiment, the preset temperature may be a specific temperature in the range of 300 °C or higher and 400 °C or lower.

Since the fire extinguishing liquid 300 is disposed in the cavity 200 of the housing 100 including the first and second housing portions 110 and 120, the battery disconnect unit 10 according to the first embodiment of the present disclosure may maintain the normal function usually, and exhibit the fire extinguishing function when a fire occurs, so that the safety of the battery is maintained.

The housing 100, *i.e.,* the first and second housing portions 110 and 120, of the battery disconnect unit 10 are, for example, made of a material with a high melting point, in order not to be destroyed by heat when a fire occurs. For example, the housing 100 may be made of a metal. In an embodiment, the housing 100 may be made of, for example, aluminum (Al), a stainless steel (STS), or an alloy including a plurality of metals. In consideration of, for example, a formability in a manufacturing process, the housing 100 may be made of aluminum (Al).

According to the first embodiment of the present disclosure, the housing 100 including the first and second housing portions 110 and 120 may further include a cover (plug) 400. With this configuration, a passage may be further formed in each of the first housing portion 110 and the second housing portion 120, as a channel through which the fire extinguishing liquid 300 may move (flow) to the outside of the first and second housing portions 110 and 120. In an embodiment, the passage of the housing 100 may be formed in the shape, for example, of a cylindrical tube, extending from the cavity 200 storing the fire extinguishing liquid 300 to communicate with the outside of the first and second housing portions 110 and 120. The cover (plug) 400 of the housing 100 is, for example, disposed in the passage through which the fire extinguishing liquid 300 passes, to prevent the fire extinguishing liquid 300 from being ejected to the outside under a condition below a preset temperature. In an embodiment, the cover (plug) 400 of the housing 100 may be disposed at an inlet formed to inject the fire extinguishing liquid 300 into the cavity 200. That is, the fire extinguishing liquid 300 may be accommodated in the cavity 200 of the housing 100 by the cover (plug) 400 under the condition below the preset temperature, and may be ejected from the cavity 200 to the outside through the passage.

As described above, the preset temperature may be a specific temperature in the range of 300 °C or higher and 400 °C or lower.

The cover (plug) 400 may have substantially the same cross section as the cross section of the passage to prevent the outward ejection of the fire extinguishing liquid 300 under the condition below the preset temperature. The extending length of the cover (plug) 400 may reach the outer surface of the housing 100 along the passage or be shorter than the length of the passage.

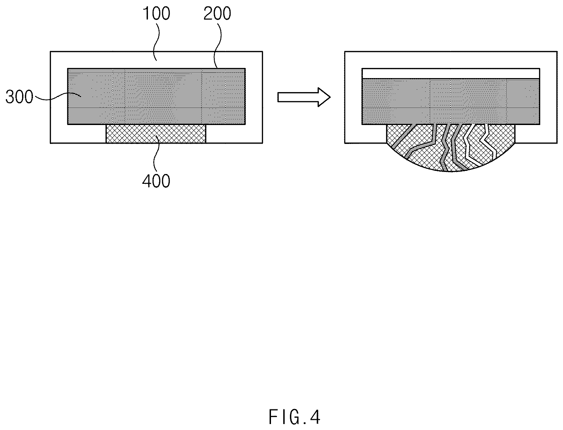

FIG. 4 is an enlarged view of the portion "B" of FIG. 3 that schematically illustrates a state where the fire extinguishing liquid 300 is being or has been released from the cavity 200.

The cover (plug) 400 of the housing 100 including the first and second housing portions 110 and 120 may form flow paths (capillaries) therein through which the fire extinguishing liquid 300 may move (flow) at the preset temperature or higher. That is, at the preset temperature or higher, the fire extinguishing liquid 300 may be ejected to the outside of the housing 100 through the flow paths (capillaries) formed in the cover (plug) 400, thereby delaying or preventing the spread of a fire.

As an example of a configuration to form the flow paths at the preset temperature or higher, the cover (plug) 400 of the first and second housing portions 110 and 120 may be made of silicone, and for example, may be made of a fire-resistant silicone.

The fire-resistant silicone may have a fire resistance, and ceramize at the preset temperature or higher. Here, the fire resistance may refer to a property of resisting a fire, and the ceramization may refer to a hardening state resulting from heat. Since the cover (plug) 400 is made of the fire-resistant silicone, it may ceramize while resisting a fire. The fire-resistant silicone may ceramize at a specific temperature or higher, which is in the range of 300 °C or higher and 400 °C or lower.

Referring to FIG. 4, the fire-resistant silicone ceramizes while expanding at the preset temperature or higher, forming crevices (capillaries) therein, so that the fire extinguishing liquid 300 may pass through the passage by flowing through flow paths formed along the crevices. For example, while the cover (plug) 400 hardens by the ceramization, the inside of the cover (plug) 400 cracks, forming the crevices (capillaries) through which the fire extinguishing liquid 300 may flow. That is, the crevices (capillaries) of the cover (plug) 400 may serve as the flow paths through which the fire extinguishing liquid 300 moves from the cavity 200 to the outside of the housing 100. Since the passage, which is the channel for the fire extinguishing liquid 300, extends from the cavity 200 storing the fire extinguishing liquid 300 to communicate with the outside of the housing 100 through the outside of the cavity 200, the fire extinguishing liquid 300 may be ejected to the outside of the housing 100 through the passage.

The housing 100 of the battery disconnect unit 10 according to the first embodiment of the present disclosure includes the cover (plug) 400 made of the material that, for example, ceramizes at the preset temperature or higher, so that the fire extinguishing liquid 300 may be used selectively in a necessary situation. Further, since the fire extinguishing liquid 300 may be continuously ejected over a certain period of time, the spread of a fire may be efficiently suppressed or prevented.

Referring back to FIGS. 1 and 3, in an embodiment, the first housing portion 110 of the housing 100 may be disposed above the electrical component 500, and the second housing portion 120 thereof may be disposed below the electrical component 500.

Thus, the fire extinguishing liquid 300 may include a first extinguishing liquid 310 disposed in the cavity 200 formed inside the first housing portion 110 and a second extinguishing liquid 320 disposed in the cavity 200 formed inside the second housing portion 120. For example, each of the first extinguishing liquid 310 and the second extinguishing liquid 320 may be disposed in a plurality of cavities 200 inside each of the first housing portion 110 and the second housing portion 120.

In the first housing portion 110, a first passage may be formed as the channel extending from the cavity 200 storing a first fire extinguishing liquid 310 to communicate with the outside of the first housing portion 110. In the second housing portion 120, a second passage may be formed as the channel extending from the cavity 200 storing a second extinguishing liquid 320 to communicate with the outside of the second housing portion 120. Further, the first housing portion 110 may include a first cover 410 disposed in the first passage, and the second housing portion 120 may include a second cover 420 disposed in the second passage. That is, the first cover 410 may prevent the first extinguishing liquid 310 from being ejected to the outside of the first housing portion 110 under the condition below the preset temperature, and the second cover 420 may prevent the second extinguishing liquid 320 from being ejected to the outside of the second housing portion 120 under the condition below the preset temperature.

In the battery disconnect unit 10 according to the first embodiment of the present disclosure, the plurality of fire extinguishing liquids 300 are disposed on both sides of the electrical component 500, so that the fire extinguishing liquid 300 may be ejected in a broader range when a fire occurs.

Meanwhile, each of the first passage formed in the first housing portion 110 and the second passage formed in the second housing portion 120 may extend toward the electrical component 500. Thus, the fire extinguishing liquid 300 may pass through the passage by flowing through the flow paths formed along the crevices of the cover (plug) 400, and be ejected toward the location where the electrical component 500 is disposed. Since the passage is formed to extend toward the electrical component 500, the fire extinguishing liquid 300 may efficiently prevent the electrical component 500 from being disenabled due to a fire.

The electrical component 500 of the battery disconnect unit 10 according to the first embodiment of the present disclosure may include a relay 510 and a busbar 520. The relay 510 may function to open and close an electrical circuit connected to the battery module M. Further, when the electrical component 500 includes a plurality of relays 510, the busbar 520 may electrically connect the plurality of relays 510 to each other.

### Second Embodiment

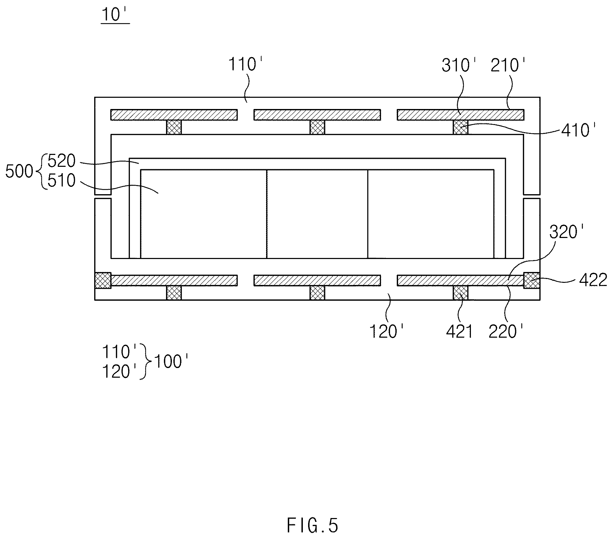

FIG. 5 is a cross-sectional view taken by cutting a battery disconnect unit 10' in an assembled state according to a second embodiment of the present disclosure, at the same position and in the same direction as those of the line A-A' of FIG. 1. That is, FIG. 5 represents the cross-section of the battery disconnect unit 10' according to the second embodiment of the present disclosure, which is cut at the same position and in the same direction as those of the line A-A' of FIG. 1.

Hereinafter, descriptions of the same configuration as the configuration of the battery disconnect unit 10 according to the first embodiment of the present disclosure will be omitted, and descriptions will be made focusing on different configurations. The battery disconnect unit according to the second embodiment of the present disclosure may be different from the first embodiment in terms of the shape of passages. Specifically, the passages in the second embodiment of the present disclosure may be different from those in the first embodiment in terms of, for example, the direction in which the passages extend and the positions of the passages.

A housing 100' according to the second embodiment of the present disclosure may include a first housing portion 110' and a second housing portion 120'. The first housing portion 110' may include a first fire extinguishing liquid 310' disposed in a cavity 210' formed inside the first housing portion 110', and a first cover 410' disposed in a first passage formed to extend from the cavity 210' to communicate with the outside of the first housing portion 110'. The second housing portion 120' may include a second fire extinguishing liquid 320' disposed in a cavity 220' formed inside the second housing portion 120', and a second cover 420' disposed in a second passage formed to extend from the cavity 220' to communicate with the outside of the second housing portion 120'.

At this time, the first passage and the second passage may extend in different directions from each other. Referring to FIG. 5, the first passage may extend from the cavity 210' storing the first fire extinguishing liquid 310' toward the electrical component 500, and the second passage may extend from the cavity 220' storing the second fire extinguishing liquid 320' in the direction away from the electrical component 500. Thus, when a fire occurs, the first fire extinguishing liquid 310' and the second fire extinguishing liquid 320' may be ejected to different positions.

In the battery disconnect unit 10' according to the second embodiment of the present disclosure, the first fire extinguishing liquid 310' may prevent the electrical component 500 in the battery disconnect unit 10' from being destroyed by a fire when the battery disconnect unit 10' is exposed to the preset temperature or higher due to a fire. Further, the second fire extinguishing liquid 320' may suppress or prevent the fire from spreading to the outside of the battery disconnect unit 10'. Thus, the second fire extinguishing liquid 320' may delay the thermal runaway in the battery pack P. Here, the preset temperature may be a specific temperature in the range of approximately 300 °C or higher and approximately 400 °C or lower.

As an example of a configuration to eject the second fire extinguishing liquid 320' in the broader range, the second passage according to the second embodiment of the present disclosure may include a lower passage and a side passage.

Referring to FIG. 5, the lower passage may be formed to extend in one direction from one side of the cavity 220' of the second housing portion 120' in which the second fire extinguishing liquid 320' is disposed. Here, the "one side" may refer to the bottom of the cavity 220', and the "one direction" may refer to the direction toward the bottom of the second housing portion 120'. The side passage may be formed to extend in another direction from another side of the cavity 220' of the second housing portion 120' in which the second fire extinguishing liquid 320' is disposed. Here, the "another side" may refer to the side portion of the cavity 220', and the "another direction" may refer to the direction toward the side surface of the second housing portion 120'. Thus, the side passage may extend toward the lateral side of the second housing portion 120'.

With the configuration above, the second housing portion 120' according to the second embodiment of the present disclosure may include a lower cover 421 and a side cover 422. The lower cover 421 may be disposed in the lower passage, and the side cover 422 may be disposed in the side passage.

The lower cover 421 and the side cover 422 may each prevent the second fire extinguishing liquid 320' from being ejected to the outside of the second housing portion 120' under the condition below the preset temperature. Further, the lower cover 421 and the side cover 422 may each enable the second fire extinguishing liquid 320' to be ejected to the outside of the second housing portion 120' through flow paths formed along crevices formed inside the lower cover 421 and the side cover 422 at the preset temperature or higher. As in the first embodiment of the present disclosure, the crevices are formed inside the lower cover 421 and the side cover 422, and the second fire extinguishing liquid 320' is ejected to the outside of the second housing portion 120' through the flow paths formed along the crevices. Thus, overlapping descriptions of this configuration are omitted.

The second housing portion 120' according to the second embodiment of the present disclosure may eject the second fire extinguishing liquid 320' in more various directions, to efficiently prevent the spreading of fire outside the battery disconnect unit.

Meanwhile, the battery disconnect unit 10 according to various embodiments of the present disclosure may also be applied to other types of battery packs or modules excluding the battery pack described herein.

While the embodiments of the present disclosure have been described using the drawings, the present disclosure is not limited by the embodiments. Various embodiments may be implemented by one of ordinary skill in the art to which the present disclosure belongs, within the scope equivalent to the technical idea of the present disclosure and the claims set forth below. Thus, the technical scope of the present disclosure is not limited to the descriptions herein, but should be defined with reference to the claims.

### List of Reference Numerals

P: battery pack
M: battery module
10: battery disconnect unit
100, 100': housing
110, 110': first housing portion
120, 120': second housing portion
200: cavity (for fire extinguishing liquid)
300, 300': fire extinguishing liquid
310, 310': first fire extinguishing liquid
320, 320': second fire extinguishing liquid
400, 400': cover
410, 410': first cover
420, 420': second cover
421: lower cover
422: side cover
500: electrical component
510: relay
520: bus bar

## Claims

1. A battery disconnect unit comprising:
a housing designed to accommodate an electrical component therein; and
at least one cavity formed in a body of the housing for storing a fire extinguishing liquid,
wherein the fire extinguishing liquid stored in the cavity is prevented from being ejected to an outside of the housing under a condition below a preset temperature, and is ejected to the outside of the housing at the preset temperature or higher.

2. The battery disconnect unit according to claim 1, wherein in the housing, a passage is further formed as a channel that extends from the cavity storing the fire extinguishing liquid to communicate with the outside of the housing, and
the housing further includes a cover disposed in the passage to prevent the fire extinguishing liquid from being ejected to the outside of the housing under the condition below the preset temperature.

3. The battery disconnect unit according to claim 2, wherein the cover forms flow paths therein, through which the fire extinguishing liquid passes at the preset temperature or higher.

4. The battery disconnect unit according to claim 2, wherein the cover is made of a fire-resistant silicone.

5. The battery disconnect unit according to claim 4, wherein the fire-resistant silicone hardens while expanding at the preset temperature or higher, thereby forming crevices therein, and
the fire extinguishing liquid passes through the passage by flowing through flow paths formed along the crevices.

6. The battery disconnect unit according to claim 2, wherein the housing includes
a first housing portion, and
a second housing portion coupled to the first housing portion to accommodate the electrical component.

7. The battery disconnect unit according to claim 6, wherein the fire extinguishing liquid includes
a first fire extinguishing liquid stored in a first cavity formed in the first housing portion, and
a second fire extinguishing liquid stored in a second cavity formed in the second housing portion.

8. The battery isolation unit according to claim 7, wherein in the first housing portion, a first passage is formed as a channel that extends from the first cavity storing the first fire extinguishing liquid to communicate with the outside of the housing, and
in the second housing portion, a second passage is formed as a channel that extends from the second cavity storing the second fire extinguishing liquid to communicate with the outside of the housing.

9. The battery disconnect unit according to claim 8, wherein the first passage extends from the first cavity storing the first fire extinguishing liquid toward the electrical component, and
the second passage extends from the second cavity storing the second fire extinguishing liquid in a direction away from the electrical component.

10. The battery disconnect unit according to claim 8, wherein the first housing portion includes a first cover disposed in the first passage to prevent the first fire extinguishing liquid from being ejected to the outside of the housing under the condition below the preset temperature, and
the second housing portion includes a second cover disposed in the second passage to prevent the second fire extinguishing liquid from being ejected to the outside of the housing under the condition below the preset temperature.

11. The battery disconnect unit according to claim 8, wherein the second passage includes
a lower passage extending in one direction from one side of the second cavity storing the second fire extinguishing liquid, and
a side passage extending laterally in another direction from another side of the second cavity storing the second fire extinguishing liquid.

12. The battery disconnect unit according to claim 11, wherein the second housing portion includes
a lower cover disposed in the lower passage, and
a side cover disposed in the side passage.

13. The battery disconnect unit according to claim 1, wherein the housing is made of any one of aluminum, a stainless steel, and an alloy.

14. The battery disconnect unit according to claim 1, wherein the electrical component includes one or more relays that open and close an electric circuit connected to a battery module.

15. The battery disconnect unit according to claim 14, wherein the electrical component further includes a busbar connecting the relays to each other.

16. The battery disconnect unit according to claim 1, wherein the preset temperature is in a range of approximately 300 °C or higher and approximately 400 °C or lower.

17. A battery disconnect unit comprising:
an electrical component; and
a housing,
wherein the housing includes
a cavity that stores a fire extinguishing liquid, and
a cover that forms crevices therein at a preset temperature or higher, wherein a fire extinguishing liquid moves from the cavity toward an outside of the housing through flow paths formed along the crevices.

18. A secondary battery pack comprising the battery disconnect unit of claim 1.
